(19) Europäisches Patentamt / European Patent Office / Office européen des brevets

(11) **EP 1 922 498 B1**

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(21) Anmeldenummer: **06791830.0**

(22) Anmeldetag: **05.09.2006**

(51) Int Cl.:
*F16H 55/17* *(2006.01)*        *F16H 1/14* *(2006.01)*

(86) Internationale Anmeldenummer:
**PCT/EP2006/008628**

(87) Internationale Veröffentlichungsnummer:
**WO 2007/028568 (15.03.2007 Gazette 2007/11)**

(54) **KEGELRAD MIT ANSCHLUSSVERZAHNUNG**

CONICAL GEAR WITH CONNECTING TOOTHING

ROUE CONIQUE A DENTURE D'ACCOUPLEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.09.2005 DE 102005043124**

(43) Veröffentlichungstag der Anmeldung:
**21.05.2008 Patentblatt 2008/21**

(73) Patentinhaber: **SONA BLW Präzisionsschmiede GmbH**
**80807 München (DE)**

(72) Erfinder: **ZERLING, Frank**
**85669 Reithofen (DE)**

(74) Vertreter: **Grättinger Möhring von Poschinger Patentanwälte Partnerschaft**
**Postfach 16 55**
**82306 Starnberg (DE)**

(56) Entgegenhaltungen:
**US-A- 2 448 164    US-A- 3 486 269**
**US-A- 5 759 081**

- **ROTH K ET AL: "EVOLVENTENVERZAHNUNGEN MIT EXTREMEN EIGENSCHAFTEN" ANTRIEBSTECHNIK, VEREINIGTE FACHVERLAGE, MAINZ, DE, Bd. 36, Nr. 3, März 1997 (1997-03), Seiten 82-90, XP000679992 ISSN: 0722-8546 in der Anmeldung erwähnt**

EP 1 922 498 B1

## Beschreibung

Die vorliegende Erfindung betrifft ein Kegelrad mit Anschlußverzahnung, umfassend eine Kegelverzahnung und wenigstens eine sich an deren einem Ende lückenlos anschließende weitere Verzahnung mit gleicher Zähnezahl.

Ein solches Kegelrad mit einer als Stirnverzahnung ausgebildeten Anschlußverzahnung ist aus der FR 909413 bekannt. Dabei sind die aneinander anschließenden Verzahnungen von einer Kante getrennt weitere derartige Kegelräder, die alle Merkmale des Oberbegriffs des unabhängigen Anspruchs 1 zeigen, sind aus der Druckschrift US-A-5759081 bekannt.

Ein kantenfreier Übergang zweier Verzahnungen ist bisher nur aus dem Artikel "Evolventenverzahnungen mit extremen Eigenschaften" von Karheinz Roth und Shyi-Jeng Tsai aus der Zeitschrift Antriebstechnik, 1997, Jg. 36, Heft 3, S. 82-90 bekannt, wo zum Zwecke der relativen Verschwenkbarkeit zweier Torusräder zwei einander in ihren Verzahnungsparametern entsprechende Konus- und Stirnverzahnungen ineinander überführt werden.

Aus dem Stand der Technik sind zudem bereits Kegelräder mit einer im Vergleich zur axialen Länge der Kegelverzahnung sehr kurzen, sich axial lückenlos an die Kegelverzahnung anschließenden Stirnverzahnung bekannt, bei denen das Verzahnungsprofil der Stirnverzahnung dem in axialer Richtung projizierten Kegelverzahnungsprofil entspricht. Eine solche Stirnverzahnung kann nur als Steckverzahnung genutzt werden.

Ferner sind aus dem Stand der Technik Kegelräder mit einer sich als Außenverzahnung der Kegelverzahnung axial beabstandet anschließenden Stirnverzahnung bekannt. Die Außenverzahnung ist dabei als reine Steckverzahnung ausgebildet und weist einen im Vergleich zum Außendurchmesser der Kegelverzahnung kleineren Kopfkreisdurchmesser sowie eine andere Zähnezahl als die Kegelverzahnung auf.

Vor diesem Hintergrund ist es die Aufgabe der vorliegenden Erfindung, ein Kegelrad mit erweiterter Funktionalität bereitzustellen.

Diese Aufgabe wird durch ein erfindungsgemäßes Kegelrad mit den Merkmalen des Anspruchs 1 gelöst. Dabei weisen beide Verzahnungen, also die Kegelverzahnung und die sich lückenlos an diese anschließende Anschlußverzahnung die gleiche Zähnezahl auf, womit die Verzahnungen direkt ineinander übergehen können. Die Zähne und Zahnflanken beider Verzahnungen gehen bevorzugt einstückig ineinander über. Ferner sind sowohl die Kegelverzahnung als auch die Anschlußverzahnung in Art evolventischer Wälzverzahnungen ausgebildet, womit - im Gegensatz zum Stand der Technik - die Anschlußverzahnung nicht nur als Steckverzahnung, sondern auch zur wälzenden Kraftübertragung mit einem anderen Zahnrad geeignet ist. Schließlich ist der Übergangsbereich der einander lükkenlos anschließenden Verzahnungen kantenfrei ausgebildet, und die Verzahnungsparameter von Kegelverzahnung und Anschlußverzahnung sind separat und voneinander abweichend vorgegeben.

Ein erfindungsgemäßes Kegelrad, wird bevorzugt mittels eines umformenden Herstellungsprozesses hergestellt. Dem Fachmann stehen die insoweit aus dem Stand der Technik bekannten umformenden Verfahren, wie beispielsweise Warm- und Kaltumformen, auch Schmieden, zur Ver fügung. Während zwar prinzipiell auch eine spanende Herstellung möglich ist, so lassen sich die Eigenschaften eines erfindungsgemäßen Kegelrads, insbesondere die Kantenfreiheit im Übergangsbereich, in besonders einfacher Weise durch ein umformendes Herstellungsverfahren realisieren. Ferner können dabei sowohl die Kegelverzahnung als auch die Anschlußverzahnung gleichzeitig in einem Arbeitsschritt hergestellt werden.

Gemäß einer ersten vorteilhaften Ausgestaltung der Erfindung genügen die Verzahnungsparameter beider Verzahnungen im Übergangsbereich den gegenseitigen evolventischen Wälzbedingungen, womit ein schonendes Abwälzen eines mit einer der beiden Verzahnungen kämmenden Zahnrads auch im Übergangsbereich gewährleistet ist.

Bei der Anschlußverzahnung handelt es sich bevorzugt um eine als Stirnverzahnung ausgebildete Außenverzahnung, die der Kegelverzahnung an ihrem Ende mit größerem Modul, d.h. an dem Ende größeren Durchmessers, axial anschließt. Möglich ist aber auch eine am gegenüberliegenden kleineren Modul ansetzende Stirnverzahnung derart, daß diese alternativ mit der Kegelverzahnung durch entsprechende Verzahnungspartner jeweils bis in den Übergangsbereich hinein nutzbar sind.

Bei dem erfindungsgemäßen Kegelrad entspricht die Auslegung der Kegelverzahnung vorteilhaft den Regeln der DIN 3971 und die Außenverzahnung ist als Stirnverzahnung bevorzugt nach den Regeln der DIN 3960 ausgebildet.

Die Kegelverzahnung und/oder die Anschlußverzahnung eines erfindungsgemäßen Kegelrads können vorteilhaft eine Balligkeit aufweisen. Als Übergangsbereich ist derjenige Bereich anzusehen, in welchem die beiden Verzahnungen kantenfrei ineinander übergeführt werden. In dem Fall, daß beide Verzahnungen eine Balligkeit aufweisen, kann der Übergangsbereich als derjenige Bereich der ineinander übergehenden Verzahnungen präzisiert werden, der zwischen den jeweiligen Tragbildern der Verzahnungen liegt.

Die Geometrie beider Verzahnungen kann durch geeignete Wahl der für die jeweilige Verzahnung maßgeblichen Verzahnungsparameter separat vorgegeben werden. Für die Auslegung der Kegelverzahnung ist hierfür insbesondere ihr Eingriffswinkel ($\alpha_{KV}$), ihr Modul ($m_{KV}$), ihr Profilverschiebungsfaktor ($x_{KV}$) und ihr Teilkegelwinkel ($\delta_{KV}$) von Bedeutung. Für eine Stirnverzahnung ist dies insbesondere ihr Eingriffswinkel ($\alpha_{St}$), ihr Modul ($m_{St}$), ihr Profilverschiebungsfaktor ($x_{St}$) und ihr Teilkreisdurchmesser ($d_{St}$). Die vorgenannten Parameter können ggfs. über die Breite der jeweiligen Verzahnung, insbesondere im Übergangsbereich der Verzahnungen variieren.

In einer weiteren vorteilhaften Ausgestaltung der Erfindung sind die Verzahnungsparameter von Kegelverzahnung und Stirnverzahnung derart in Abhängigkeit voneinander gewählt, daß sowohl ein auf der Kegelverzahnung wälzendes Kegelrad, dessen Verzahnung in die Stirnverzahnung des Kegelrads hineinreicht, als auch ein auf der Stirnverzahnung wälzendes Stirnrad, dessen Stirnverzahnung in die Kegelverzahnung hineinreicht, störungsfrei abwälzen kann.

Ferner weist das Kegelrad im Übergangsbereich der Verzahnungen vorteilhaft eine Endrücknahme ihrer Zahnflanken auf, derart daß der Verlauf einer Flankenlinie im Übergangsbereich beidseits tangential in den Verlauf einer Flankenlinie von Kegel- bzw. Stirnverzahnung übergeht. Dadurch ist im Bereich der Zahnflanken ein besonders schonender und gleichmäßiger Übergang der beiden Verzahnungen gewährleistet.

Wiederum vorteilhaft weist das Kegelrad im Übergangsbereich der Verzahnungen eine Endrücknahme des Kopfkreisdurchmessers ihrer Zähne auf, derart daß der Verlauf des Kopfkreisdurchmessers im Übergangsbereich beidseits tangential in den Verlauf des Kopfkreisdurchmessers von Kegel- bzw. Stirnverzahnung übergeht.

Weder die Kegelverzahnung noch die Stirnverzahnung stehen damit am Außenumfang des Kegelrads gegenüber dem jeweils anderen Teil des Kegelrads hervor. Ferner ist dadurch ein glatter, kantenloser und runder Übergang mit ggfs. variablem Radius zwischen beiden Verzahnungen auf der Außenfläche des erfindungsgemäßen Kegelrads gewährleistet.

Gemäß einer weiteren vorteilhaften Ausgestaltung der Erfindung weisen der jeweilige Modul von Stirn- bzw. Kegelverzahnung im Schnittpunkt des Teilkreises der Stirnverzahnung mit dem Teilkegel der Kegelverzahnung den gleichen Wert auf, was einen besonders glatten Übergang der Verzahnungen ermöglicht. Dies ist insbesondere dann von Vorteil, wenn die voneinander abweichenden Verzahnungsparameter von Kegel- und Stirnverzahnung in einem Übergangsbereich der Verzahnungen möglichst stetig ineinander übergeführt werden.

Außerdem kann das Kegelrad vorteilhaft auch eine radial innerhalb der Stirnverzahnung angeordnete InnensteckVerzahnung aufweisen. Dies erhöht nochmals die Funktionalität eines erfindungsgemäßen Kegelrads. Seitens der vorteilhaft als Stirnverzahnung ausgebildeten Anschlußverzahnung ergeben sich somit drei verschiedene Möglichkeiten der Kraftübertragung: Zum einen kann die Kraftübertragung über die Stirnverzahnung erfolgen, und zwar entweder wälzend oder durch Nutzung der Stirnverzahnung als Außensteckverzahnung. In letzterem Fall kann die Stirnverzahnung z.B. mit einer entsprechend angepaßten Innensteckverzahnung einer Nabe zusammenwirken. Zum andern kann - entweder optional oder zusätzlich - auch die Innensteckverzahnung zur Kraftübertragung genutzt werden.

Bei der Auslegung der Verzahnungen eines erfindungsgemäßen Kegelrads kann sich - unter Berücksichtigung der gewünschten Randbedingungen - die Stirnverzahnung in ihrer parameterabhängigen Auslegung in vorteilhafter Weise als Funktion der Verzahnungsparameter der Kegelverzahnung ergeben. Damit gilt mit einer geeigneten Funktion f:

$$(\alpha_{St},\ x_{St},\ m_{St})\ =\ f(\alpha_{KV},\ x_{KV},\ m_{KV},\ \delta_{KV}),$$

wobei die Indizes St für "Stirnverzahnung" und KV für "Kegelverzahnung" stehen.

In nachfolgender Tabelle sind die für die vorstehenden Parameter in Frage kommenden Grenzbereiche sowie bevorzugt hieraus zu wählende Bereiche veranschaulicht:

| Parameter | Grenzbereich | bevorzugter Bereich |
|---|---|---|
| $\alpha_{St}$ | 12° bis 45° | 17° bis 30° |
| $\alpha_{St}$ | -1,0 bis 1,0 | -0,5 bis 0,5 |
| $m_{St}$ | 0,01 bis ∞ | 1 bis 20 |
| $\alpha_{KV}$ | 12° bis 45° | 17° bis 30° |
| $x_{KV}$ | -1,0 bis 1,0 | -0,5 bis 0,5 |
| $m_{KV}$ | 0,01 bis ∞ | 1 bis 20 |
| $\delta_{KV}$ | 1° bis 179° | 10° bis 90° |

Die bevorzugten Bereiche ergeben sich unter Berücksichtigung des vorgesehenen Anwendungsbereichs und der damit verbundenen Anforderungen an das erfindungsgemäße Kegelrad. Insbesondere ist für den bevorzugten Bereich des Moduls der Kegelverzahnung der potentiell zur Verfügung stehende Bauraum von Bedeutung. Der bevorzugte Eingriffswinkelbereich der Kegelverzahnung steht in Zusammenhang mit der zu erwartenden Flankenbelastung der Verzahnung, die Profilverschiebung mit der zu erreichenden Fußtragfähigkeit und der Teilkegelwinkel mit dem Zähnezahlverhältnis zu dem mit der Kegelverzahnung kämmenden Kegelrad. Für die Stirnverzahnung gelten vergleichbare Gesichtspunkte.

Wie bereits zuvor erwähnt ist in einem Übergangsbereich der Verzahnungen durch eine in diesem Bereich variable Anpassung der Parameter vorteilhaft dafür zu sorgen, daß die Verzahnungen, insbesondere die Zahnflanken, möglichst glatt ineinander übergeführt werden. Im Übergangsbereich kann an die Funktion f vorteilhaft die Grenzbedingung gestellt werden, daß der Modul der Stirnverzahnung im Schnittpunkt des Teilkreises der Zylinderverzahnung mit dem Teilkegel der Kegelverzahnung den gleichen Wert aufweist, wie der Modul der Kegelverzahnung. Weitere Randbedingungen an die Funktion f ergeben sich aus den bereits vorerwähnten vorteilhaften Ausgestaltungen.

Ferner ist die vorliegende Erfindung nicht auf ein geradverzahntes Kegelrad mit einer sich daran anschließenden geradverzahnten Stirnverzahnung beschränkt. Die vorstehenden Überlegungen sind ebenso auf eine schrägverzahnte Kegelverzahnung mit einer sich daran anschließenden schrägverzahnten Stirnverzahnung anwendbar, wobei dann bevorzugt die Schrägungswinkel von Stirn- und Kegelverzahnung einander entsprechen sollten.

Nachfolgend wird ein Ausführungsbeispiel eines erfindungsgemäßen Kegelrads anhand der Zeichnung näher erläutert. Dabei zeigt

Fig. 1 einen Längsschnitt durch ein Ausführungsbei- spiel eines erfindungsgemäßen Kegelrads,
Fig. 2 eine perspektivische Darstellung des Kegel- rads nach Fig. 1 und
Fig. 3 eine frontale Draufsicht auf das Kegelrad nach den Fig. 1 und 2.

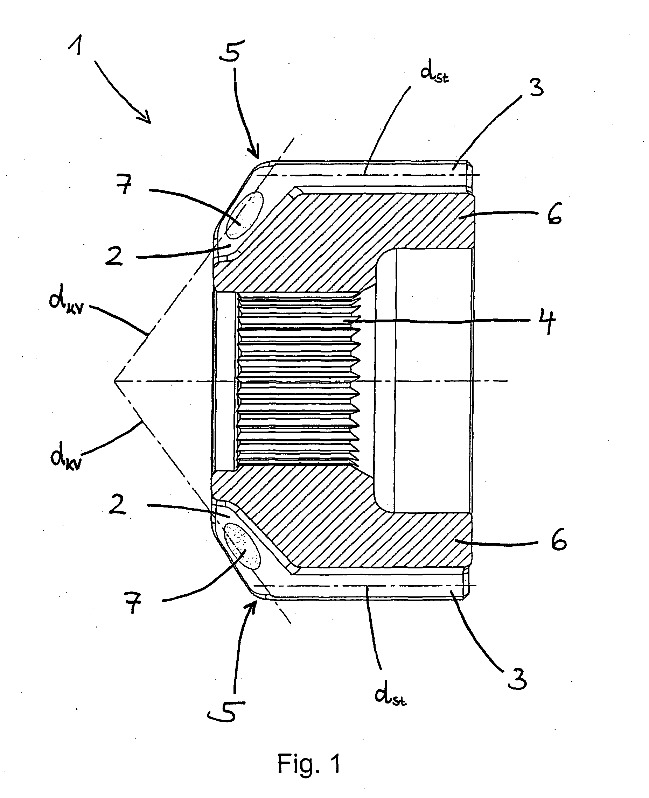

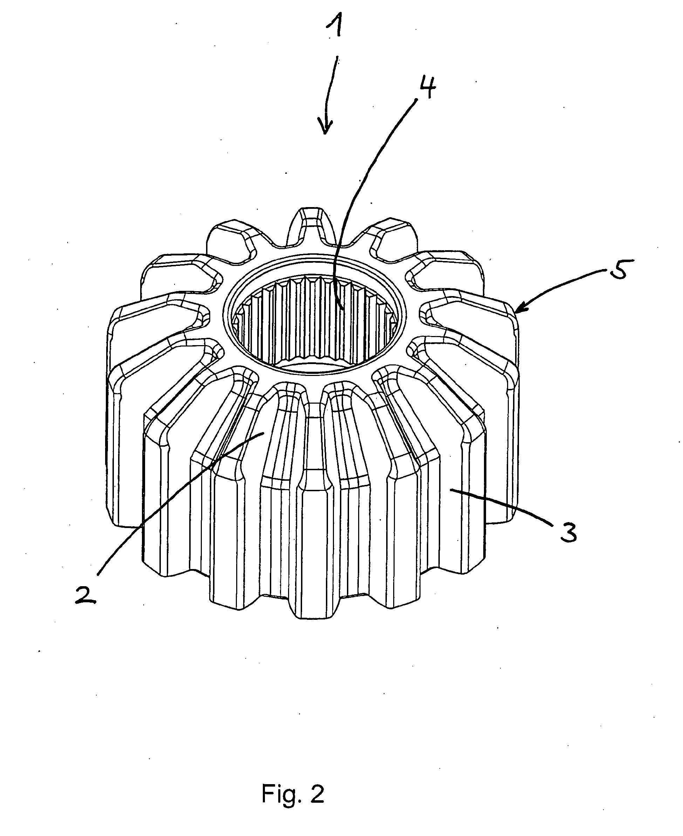

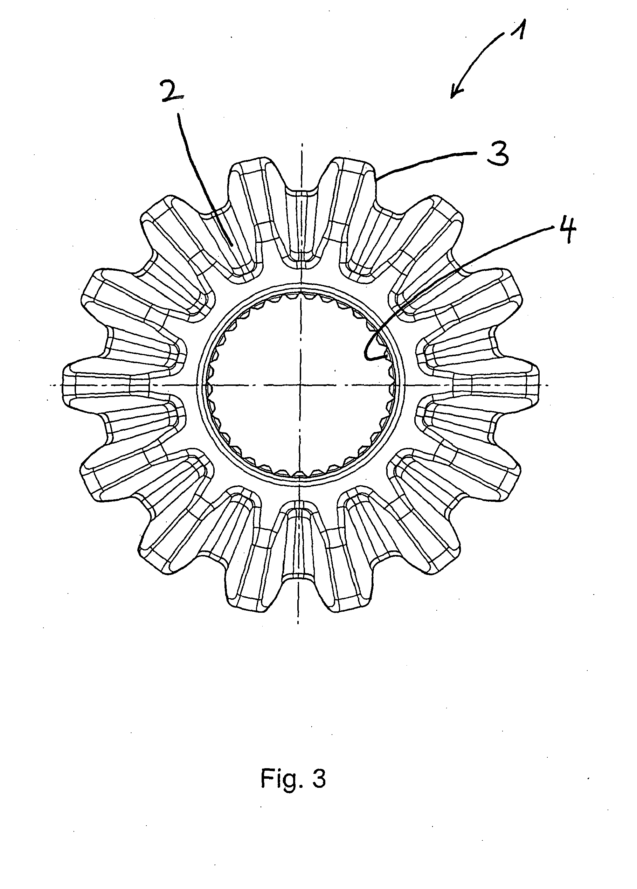

Das in den Fig. 1 bis 3 dargestellte Ausführungsbeispiel eines erfindungsgemäßen Kegelrads 1 umfaßt eine Kegelverzahnung 2 und eine sich - an deren Ende mit größerem Modul - lückenlos axial daran anschließende Stirnverzahnung 3 als Anschlußverzahnung. Beide Verzahnungen 2, 3 sind geradverzahnt. Ferner weist das Kegelrad 1 zusätzlich eine Innensteckverzahnung 4 auf, die radial innerhalb der Stirnverzahnung 3 und der Kegelverzahnung 2 angeordnet ist. Diese kann beispielsweise zum Herstellen einer drehfesten Verbindung mit einer Außensteckverzahnung einer Welle o. dgl. dienen. Die Kegel- 2 und die Stirnverzahnung 3 weisen beide mit vierzehn Zähnen die gleiche Zähnezahl auf. Ferner sind Kegelverzahnung 2 und Stirnverzahnung 3 als evolventische Wälzverzahnung ausgebildet, so daß sie jeweils zur Kraftübertragung mit einem mit ihr kämmenden zweiten Kegel- bzw. Stirnrad geeignet ist. Ferner ist gut zu sehen, daß Kegel- und Stirnverzahnung direkt ineinander übergehen. Der Übergangsbereich 5 der Verzahnungen 2, 3 ist kantenfrei ausgebildet. Insbesondere in der Frontansicht aus Fig. 3 ist zu erkennen, daß ein mit der Stirnverzahnung 3 kämmendes Stirnrad selbst dann nicht von der Kegelverzahnung 2 gestört würde, wenn dieses axial bis in die Kegelverzahnung 2 hineinreicht. Umgekehrt würde auch ein weiteres Kegelrad beim Abwälzen in der Kegelverzahnung 2 nicht von der Stirnverzahnung 3 gestört, selbst wenn dieses bis in die Stirnverzahnung 3 hinein- oder gar darüber hinausreicht. Im Schnittpunkt des Teilkreises $d_{St}$ der Stirnverzahnung 3 mit dem Teilkegel $d_{KV}$ der Kegelverzahnung 2 entsprechen der Modul der Stirnverzahnung 3 und der Modul der Kegelverzahnung 2 einander. Die Zähne weisen im Übergangsbereich 5 eine Endrücknahme ihres Kopfkreisdurchmessers auf, derart daß der Verlauf des Kopfkreisdurchmessers im Übergangsbereich beidseits tangential in den Verlauf der Kopfkreisdurchmesser von Kegelverzahnung 2 und Stirnverzahnung 3 stetig und ohne Sprung oder Kante ineinander übergehen. Ferner sind auch die ineinander übergehenden Zahnflanken der Zähne der Kegelverzahnung 2 und der Stirnverzahnung 3 durch einen fließenden Übergang der jeweiligen Verzahnungsparameter in diesem Bereich so geglättet, daß ihre Zahnflanken im Übergangsbereich 5 kantenfrei sind. Insbesondere ist durch eine Rücknahme der Zahnflanken im Übergangsbereich 5 dafür gesorgt, daß die Flankenlinien der Verzahnungen im Übergangsbereich 5 beidseits tangential in eine Flankenlinie von Kegelverzahnung 2 und Stirnverzahnung 3 übergehen. Die Kegelverzahnung 2 weist eine Balligkeit auf, die durch das in Fig. 1 als gemusterte Fläche dargestellte Tragbild 7 veranschaulicht ist. Die axiale Breite der Zähne der Stirnverzahnung 3 ist größer als die axiale Breite der Zähne der Kegelverzahnung 2. Das Kegelrad 1 weist an seinem stirnseitigen Ende auf Seiten der Stirnverzahnung 3 eine radial umlaufende Verlängerung 6 auf, mit der beispielsweise eine Schulter einer mit der Innensteckverzahnung 4 verbundenen Welle formschlüssig umschlossen werden kann.

**Patentansprüche**

1. Kegelrad (1) mit Anschlußverzahnung, umfassend eine Kegelverzahnung (2) und wenigstens eine sich an deren einem Ende lückenlos anschließende weitere Verzahnung (3) mit gleicher Zähnezahl, wobei beide Verzahnungen in Art evolventischer Wälzverzahnungen ausgeführt sind und wobei die Verzahnungsparameter von Kegelverzahlung und Anschlußverzahnung separat und voneinander abweichend vorgegeben sind,
**dadurch gekennzeichnet, daß** der Übergangsbereich (5) zwischen beiden Verzahnungen kantenfrei verläuft.

2. Kegelrad (1) nach Anspruch 1,
**dadurch gekennzeichnet,**

**daß** im Übergangsbereich (5) beider Verzahnungen deren Verzahnungsparameter den gegenseitigen evolventischen Wälzbedingungen genügen.

3. Kegelrad (1) nach Anspruch 1,
   **dadurch gekennzeichnet,**
   **daß** die Anschlußverzahnung (3) als Stirnverzahnung ausgebildet ist, die sich an die Kegelverzahnung (2) an ihrem Ende mit größerem Modul anschließt.

4. Kegelrad (1) nach Anspruch 3,
   **dadurch gekennzeichnet,**
   **daß** die Verzahnungsparameter von Kegelverzahnung (2) und Stirnverzahnung (3) derart in Abhängigkeit voneinander gewählt sind, daß sowohl ein auf der Kegelverzahnung (2) wälzendes Kegelrad, dessen Verzahnung axial in die Stirnverzahnung des Kegelrads hineinreicht, als auch ein auf der Stirnverzahnung (3) wälzendes Stirnrad, dessen Stirnverzahnung axial in die Kegelverzahnung (2) hineinreicht, störungsfrei abwälzbar ist.

5. Kegelrad (1) nach Anspruch 4,
   **dadurch gekennzeichnet,**
   **daß** das Kegelrad (1) im Übergangsbereich (5) der Verzahnungen eine Endrücknahme ihrer Zahnflanken aufweist, derart daß der Verlauf einer Flankenlinie im Übergangsbereich (5) beidseits tangential in den Verlauf einer Flankenlinie von Kegel- bzw. Stirnverzahnung übergeht.

6. Kegelrad (1) nach Anspruch 4,
   **dadurch gekennzeichnet,**
   **daß** das Kegelrad (1) im Übergangsbereich (5) der Verzahnungen eine Endrücknahme des Kopfkreisdurchmessers ihrer Zähne aufweist, derart daß der Verlauf des Kopfkreisdurchmessers im Übergangsbereich beidseits tangential in den Verlauf des Kopfkreisdurchmessers von Kegel- bzw. Stirnverzahnung übergeht.

7. Kegelrad (1) nach Anspruch 4,
   **dadurch gekennzeichnet,**
   **daß** der Modul der Stirnverzahnung (3) im Schnittpunkt des Teilkreises der Stirnverzahnung mit dem Teilkegel der Kegelverzahnung (2) den gleichen Wert aufweist wie der Modul der Kegelverzahnung (2).

8. Kegelrad (1) nach Anspruch 3,
   **dadurch gekennzeichnet,**
   **daß** der Eingriffswinkel der Stirnverzahnung (3) in einem Bereich zwischen 17° und 30° liegt.

9. Kegelrad (1) nach Anspruch 3,
   **dadurch gekennzeichnet,**
   **daß** der Modul der Stirnverzahnung (3) einen Wert zwischen 1 und 20 aufweist.

10. Kegelrad (1) nach Anspruch 3,
    **dadurch gekennzeichnet,**
    **daß** der Profilverschiebungsfaktor der Stirnverzahnung (3) mit einem Wert zwischen -0,5 und +0,5 gewählt ist.

11. Kegelrad (1) nach Anspruch 3,
    **dadurch gekennzeichnet,**
    **daß** der Eingriffswinkel der Kegelverzahnung (2) in einem Bereich zwischen 17° und 30° liegt.

12. Kegelrad (1) nach Anspruch 3,
    **dadurch gekennzeichnet,**
    **daß** der Modul der Kegelverzahnung (2) einen Wert zwischen 1 und 20 aufweist.

13. Kegelrad (1) nach Anspruch 3,
    **dadurch gekennzeichnet,**
    **daß** der Profilverschiebungsfaktor der Kegelverzahnung (2) mit einem Wert zwischen -0,5 und +0,5 gewählt ist.

14. Kegelrad (1) nach Anspruch 3,
    **dadurch gekennzeichnet,**

**daß** der Teilkegelwinkel der Kegelverzahnung (2) in einem Bereich zwischen 10° und 90° liegt.

15. Kegelrad (1) nach Anspruch 3,
**dadurch gekennzeichnet,**
**daß** das Kegelrad (1) ferner eine radial innerhalb der Stirnverzahnung (3) angeordnete Innensteckverzahnung (4) aufweist.

16. Kegelrad (1) nach Anspruch 1,
**dadurch gekennzeichnet,**
**daß** das Kegelrad (1) umformend hergestellt ist.

**Claims**

1. A conical gear (1) with connecting toothing, comprising a conical toothing (2) and at least one further toothing (3) with the same number of teeth, which connects to one end thereof in a gapless manner, wherein both toothings are configured as involute rolling toothings and wherein the toothing parameters of the conical toothing and the connecting toothing are predefined separately and differently from each other, **characterised in that** the transition region (5) runs without edges between the two toothings.

2. The conical gear (1) according to Claim 1,
**characterised in that**
in the transition region (5) of the two toothings the toothing parameters thereof meet the mutual involute rolling conditions.

3. The conical gear (1) according to Claim 1,
**characterised in that**
the connecting toothing (3) is formed as an end toothing which connects at its end to the conical toothing (2) with a relatively large modulus.

4. The conical gear (1) according to Claim 3,
**characterised in that**
the toothing parameters of the conical toothing (2) and end toothing (3) are selected as a function of each other in such a manner that a conical gear, which rolls on the conical toothing (2) and the toothing of which extends axially into the end toothing of the conical gear, and an end gear, which rolls on the end toothing (3) and the end toothing of which extends axially into the conical toothing (2), can be rolled in a fault-free manner.

5. The conical gear (1) according to Claim 4,
**characterised in that**
the conical gear (1) has in the transition region (5) of the toothings an end relief in the tooth flanks thereof in such a manner that the profile of a flank trace in the transition region (5) merges tangentially on both sides into the profile of a flank trace of the conical or end toothing.

6. The conical gear (1) according to Claim 4,
**characterised in that**
the conical gear (1) has in the transition region (5) of the toothings an end relief in the tip diameter of the teeth thereof in such a manner that the profile of the tip diameter in the transition region merges tangentially on both sides into the profile of the tip diameter of the conical or end toothing.

7. The conical gear (1) according to Claim 4,
**characterised in that**
the modulus of the end toothing (3) has the same value in the intersection of the reference circle of the end toothing with the reference cone of the conical toothing (2) as the modulus of the conical toothing (2).

8. The conical gear (1) according to Claim 3,
**characterised in that**
the pressure angle of the end toothing (3) is in a range between 17° and 30°.

**9.** The conical gear (1) according to Claim 3,
**characterised in that**
the modulus of the end toothing (3) has a value between 1 and 20.

**10.** The conical gear (1) according to Claim 3,
**characterised in that**
the addendum modification coefficient of the end toothing (3) is selected with a value between -0.5 and +0.5.

**11.** The conical gear (1) according to Claim 3,
**characterised in that**
the pressure angle of the conical toothing (2) is in a range between 17° and 30°.

**12.** The conical gear (1) according to Claim 3,
**characterised in that**
the modulus of the conical toothing (2) has a value between 1 and 20.

**13.** The conical gear (1) according to Claim 3,
**characterised in that**
the addendum modification coefficient of the conical toothing (2) is selected with a value between -0.5 and +0.5.

**14.** The conical gear (1) according to Claim 3,
**characterised in that**
the pitch angle of the conical toothing (2) is in a range between 10° and 90°.

**15.** The conical gear (1) according to Claim 3,
**characterised in that**
the conical gear (1) furthermore has an internal toothing (4) which is arranged radially inside the end toothing (3).

**16.** The conical gear (1) according to Claim 1,
**characterised in that**
the conical gear (1) is produced in a non-cutting manner.


**Revendications**

**1.** Roue conique (1) à denture d'accouplement, comprenant une denture conique (2) et au moins une autre denture (3) faisant suite sans intervalle à une extrémité de la première denture, avec un nombre de dents identique, les deux dentures étant réalisées sous la forme de dentures de roulement à développante et les paramètres de denture de la denture conique et de la denture d'accouplement étant prédéfinis séparément et en s'écartant les uns des autres,
**caractérisée en ce que**
la zone de transition (5) s'étend sans arête entre les deux dentures.

**2.** Roue conique (1) selon la revendication 1,
**caractérisée en ce que,**
dans la zone de transition (5) de deux dentures, leurs paramètres de denture répondent aux conditions de roulement réciproques à développante.

**3.** Roue conique (1) selon la revendication 1,
**caractérisée en ce que**
la denture d'accouplement (3) est conçue comme denture droite qui se raccorde à la denture conique (2) par son extrémité avec un module plus grand.

**4.** Roue conique (1) selon la revendication 3,
**caractérisée en ce que**
les paramètres de denture de la denture conique (2) et de la denture droite (3) sont choisis en fonction les uns des autres, de telle sorte qu'aussi bien une roue conique roulant sur la denture conique (2), dont la denture s'engage axialement dans la denture droite de la roue conique, qu'une roue droite roulant sur la denture droite (3), roue dont la denture droite s'engage axialement dans la denture conique (2), peuvent rouler sans incident.

5. Roue conique (1) selon la revendication 4,
   **caractérisée en ce que**
   la roue conique (1) présente dans la zone de transition (5) des dentures une dépouille d'extrémité de ses flancs de dent, de telle sorte que le tracé d'une ligne de flanc dans la zone de transition (5) fait place des deux côtés tangentiellement au tracé d'une ligne de flanc de la denture conique et de la denture droite.

6. Roue conique (1) selon la revendication 4,
   **caractérisée en ce que**
   la roue conique (1) présente dans la zone de transition (5) des dentures une dépouille d'extrémité du diamètre de cercle de tête de ses dents, de telle sorte que le tracé du diamètre de cercle de tête dans la zone de transition fait place des deux côtés tangentiellement au tracé du diamètre de cercle de tête de la denture conique et de la denture droite.

7. Roue conique (1) selon la revendication 4,
   **caractérisée en ce que**
   le module de la denture droite (3) présente au point d'intersection du cercle primitif de référence de la denture droite avec le cône primitif de référence de la denture conique (2) la même valeur que le module de la denture conique (2).

8. Roue conique (1) selon la revendication 3,
   **caractérisée en ce que**
   l'angle de pression de la denture droite (3) se situe dans une plage comprise entre 17° et 30°.

9. Roue conique (1) selon la revendication 3,
   **caractérisée en ce que**
   le module de la denture droite (3) présente une valeur comprise entre 1 et 20.

10. Roue conique (1) selon la revendication 3,
    **caractérisée en ce que**
    le coefficient de déport de la denture droite (3) est choisi avec une valeur comprise entre -0,5 et +0,5.

11. Roue conique (1) selon la revendication 3,
    **caractérisée en ce que**
    l'angle de pression de la denture conique (2) se situe dans une plage comprise entre 17° et 30°.

12. Roue conique (1) selon la revendication 3,
    **caractérisée en ce que**
    le module de la denture conique (2) présente une valeur comprise entre 1 et 20.

13. Roue conique (1) selon la revendication 3,
    **caractérisée en ce que**
    le coefficient de déport de la denture conique (2) est choisi avec une valeur comprise entre -0,5 et +0,5.

14. Roue conique (1) selon la revendication 3,
    **caractérisée en ce que**
    l'angle primitif de référence de la denture conique (2) se situe dans une plage comprise entre 10° et 90°.

15. Roue conique (1) selon la revendication 3,
    **caractérisée en ce que**
    la roue conique (1) présente également une denture à emboîtement intérieur (4) disposée radialement à l'intérieur de la denture droite (3).

16. Roue conique (1) selon la revendication 1,
    **caractérisée en ce que**
    la roue conique (1) est fabriquée sans enlèvement de copeaux.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- FR 909413

- US 5759081 A

### In der Beschreibung aufgeführte Nicht-Patentliteratur

- **Karheinz Roth ; Shyi-Jeng.** Evolventenverzahnungen mit extremen Eigenschaften. *Tsai aus der Zeitschrift Antriebstechnik,* 1997, vol. Jg. 36, 82-90